# EUROPÄISCHE PATENTSCHRIFT

(11) **EP 2 019 762 B1**
(45) Veröffentlichungstag und Bekanntmachung des Hinweises auf die Patenterteilung: **27.07.2011**
(21) Anmeldenummer: 07725197.3
(22) Anmeldetag: 14.05.2007
(51) Int. Cl.: B60N 2/06, B60N 2/07, B60N 2/10, B60N 2/12

(54) **SITZANORDNUNG FÜR EIN KRAFTFAHRZEUG**
SEAT ARRANGEMENT FOR A VEHICLE
ENSEMBLE DE SIÈGE POUR VÉHICULE AUTOMOBILE

(30) Priorität: 12.05.2006 DE 102006022732; 08.08.2006 DE 102006037344
(43) Veröffentlichungstag der Anmeldung: 04.02.2009
(73) Patentinhaber: Johnson Controls GmbH, 51399 Burscheid (DE)
(72) Erfinder: GRÜDL, Peter, 52428 Jülich (DE); HERKENRATH, Guido, 42289 Wuppertal (DE); ZYNDA, Martin, 51399 Burscheid (DE); GÜSTAVEL, Andreas, 44265 Dortmund (DE); JANISCH, Ralf, 51399 Burscheid (DE); ENGELS, Bernd, 42897 Remscheid (DE); IRGANG, Andreas, 42799 Leichlingen (DE)
(74) Vertreter: Wolff, Felix
(86) Internationale Anmeldenummer: PCT/EP2007/004278
(87) Internationale Veröffentlichungsnummer: WO 2007/131761

(56) Entgegenhaltungen:
- DE-U1- 20 102 091
- JP-A- 7 108 864
- US-A- 1 471 001

## Beschreibung

Die vorliegende Erfindung betrifft eine Sitzanordnung für ein Kraftfahrzeug, wobei die Sitzanordnung ein Sitzteil und einen Sitzunterbau aufweist.

Ein weiterer Aspekt der vorliegenden Erfindung bezieht sich auf eine Sitzanordnung für ein Kraftfahrzeug, wobei die Sitzanordnung ein Sitzteil aufweist, wobei die Sitzanordnung ferner ein Verschiebeelement mit einer Verstelllänge aufweist, und wobei das Verschiebeelement ein fahrzeugfest angeordnetes Unterteil und ein Oberteil aufweist.

Solche Sitzanordnungen für Fahrzeuge sind allgemein bekannt. Eine gattungsgemäße Sitzanordnung ist aus der JP-A-07108864 bekannt, die auch nichtgeradlinig bewegbar ist. Nachteilig hieran ist, dass außer einer Verschiebung entlang einer gebogenen Strecke keine anderweitige Positionsveränderung - etwa in eine Klappstellung - des Sitzteils ohne weitere Elemente vorgesehen ist. Ferner ist aus der deutschen Gebrauchsmusterschrift DE 200 13 367 U1 eine Sitzbankanordnung für Fahrzeuge bekannt, wobei die Sitzbankanordnung mindestens zwei verschieblich zu einer Bodenstruktur im Fahrzeug nebeneinander angeordnete Teilsitze aufweist, wobei die Teilsitze jeweils auf einer Führungsbahn verschieblich sind, die schräg zu einer in Fahrtrichtung des Fahrzeugs verlaufenden Längsachse verläuft. Dies hat den Nachteil, dass lediglich gerade Bewegungen und keine gekrümmten Bewegungen bzw. Verschiebungen der Teilsitze möglich sind. Dies ist dann besonders von Nachteil, wenn im Innenraum des Fahrzeugs Gegenstände oder Teile der Karosserie angeordnet sind, um die herum eine Sitzverschiebung erfolgen muss. In einem solchen Fall ist eine geradlinige Bewegung des Sitzes nachteilig.

Die Aufgabe der vorliegenden Erfindung war daher, eine Sitzanordnung für ein Kraftfahrzeug vorzuschlagen, bei der in einfacher Weise eine besonders flexible Verschiebbarkeit des Fahrzeugsitzes gegeben ist, und die dennoch vergleichsweise leicht, robust und kostengünstig herstellbar ist und sicher mit der Bodenbaugruppe verbindbar ist.

Diese Aufgabe wird durch die Merkmale des Anspruchs 1 gelöst.

Ferner ist es erfindungsgemäß weiterhin bevorzugt, dass der wenigstens eine Gelenkarm um die Stange drehbar und entlang der Stange verschieblich vorgesehen ist. Hierzu weist der Gelenkarm insbesondere eine Buchse auf, welche die Stange umgreift und dadurch sowohl entlang der Stange verschieblich ist als auch um die Stange drehbar ist.

Ferner ist es erfindungsgemäß bevorzugt, dass der Sitzunterbau ein Verschiebeelement zur Verschiebung des Sitzteils im wesentlichen parallel zur Sitzlängsachse aufweist, wobei auf einem ersten Teilabschnitt einer Verstelllänge eine erste Längsbewegung des Sitzteils parallel zur Sitzlängsachse und eine erste Querbewegung parallel zu der Querachse vorgesehen ist, wobei auf einem zweiten Teilabschnitt der Verstelllänge eine zweite Längsbewegung des Sitzteils parallel zu der Sitzlängsachse und eine zweite Querbewegung parallel zur Querachse vorgesehen ist und wobei sich das Verhältnis der ersten Längsbewegung zur ersten Querbewegung vom Verhältnis der zweiten Längsbewegung zur zweiten Querbewegung unterscheidet. Hierdurch ist es erfindungsgemäß vorteilhaft möglich, dass beliebige Verstellbewegungen des Sitzes bzw. der Sitzanordnung innerhalb eines Fahrzeugs entlang der Verstelllänge bei der erfindungsgemäßen Sitzanordnung realisiert werden können.

Ferner ist es erfindungsgemäß bevorzugt, dass das Verschiebeelement ein fahrzeugfest angeordnetes Unterteil und ein Oberteil aufweist, wobei auf dem ersten Teilabschnitt und/oder auf dem zweiten Teilabschnitt eine Relativbewegung des Sitzteils gegenüber dem Oberteil vorgesehen ist. Hierdurch kann beispielsweise das Oberteil derart vorgesehen sein, dass es lediglich gerade in einer vorgegebenen Richtung verstellt wird (beispielsweise in die Sitzlängsachse), wodurch das Verschiebeelement besonders einfach und besonders robust hergestellt werden kann, wobei dennoch das Sitzteil und damit der Hauptteil des Sitzes auf einer an die Gegebenheiten des Innenraums des Fahrzeugs angepassten Verschiebebahn bewegt werden können.

Erfindungsgemäß ist es ferner bevorzugt, dass die Sitzanordnung ein Verriegelungselement aufweist, wobei das Verriegelungselement zur Fixierung der Sitzanordnung an zumindest einer Verriegelungsposition entlang der Verstelllänge vorgesehen ist. Hierdurch ist es möglich, eine Verstellung der Sitzanordnung auf der Verstelllänge an wenigstens einem Haltepunkt zu fixieren.

Weiterhin ist es erfindungsgemäß bevorzugt, dass das Verschiebeelement eine Führungskulisse und einen in der Führungskulisse bewegbaren Stift aufweist. Es wird hierdurch eine Führung der Verstellbewegung bzw. der Verschiebebewegung der Sitzanordnung entlang der Verstelllänge in einfacher Weise realisiert, wobei dennoch eine große Robustheit der Anordnung mit einer Verstellkulisse und einem Führungsstift möglich ist.

Erfindungsgemäß ist weiterhin auch bevorzugt, dass das Verschiebeelement als eine Führungsschiene vorgesehen ist, wobei die Führungsschiene eine Oberschiene und eine Unterschiene aufweist und wobei das Oberteil die Oberschiene umfasst und das Unterteil die Unterschiene umfasst. Hierdurch kann in besonders einfacher Weise sowie mit einer eingeführten Technologie, und damit vergleichsweise kostengünstig, eine Verschiebung der Sitzanordnung relativ zur Bodenbaugruppe des Kraftfahrzeugs realisiert werden, die zum einen besonders stabil und zum anderen besonders leichtgängig verschiebbar ist. Diese besonders leichtgängige Verschiebemöglichkeit ist insbesondere dann möglich, wenn die Führungsschiene mittels Kugellagern beweglich gelagert vorgesehen ist.

Erfindungsgemäß ist es ferner bevorzugt, dass auf dem ersten Teilabschnitt und/oder auf dem zweiten Teilabschnitt eine Relativbewegung des Oberteils gegenüber dem Sitzteil vorgesehen ist. Hierdurch kann beispielsweise das Oberteil derart vorgesehen sein, dass es lediglich gerade in einer vorgegebenen Richtung verstellt wird, wodurch das Verschiebeelement besonders einfach und besonders robust hergestellt werden kann, wobei dennoch das Sitzteil und damit der Hauptteil des Sitzes auf einer an die Gegebenheiten des Innenraums des Fahrzeugs angepassten Verschiebebahn bewegt werden können.

Ferner ist es erfindungsgemäß bevorzugt, dass die Sitzanordnung ein Verriegelungselement aufweist, wobei das Verriegelungselement zur Fixierung der Sitzanordnung an zumindest einer Verriegelungsposition entlang der Verstelllänge vorgesehen ist bzw. dass eine Vielzahl von Verriegelungspositionen entlang der Verstelllänge vorgesehen sind. Hierdurch ist es möglich, eine Verstellung der Sitzanordnung auf der Verstelllänge an wenigstens einem bevorzugt jedoch an einer Vielzahl von Haltierungspunkten zu fixieren.

Weiterhin ist es erfindungsgemäß bevorzugt, dass das Verriegelungselement zur direkten Verriegelung des Oberteils mit dem Unterteil vorgesehen ist. Hierdurch kann eine besonders robuste Verriegelung der Sitzanordnung relativ zum Fahrzeug bzw. zur Bodengruppe des Fahrzeugs realisiert werden. Insbesondere kann in diesem Fall vorteilhafterweise das Verriegelungselement in das Verschiebeelement integriert werden, beispielsweise in der Art eines verriegelbaren Führungsschienensystems.

Weiterhin ist es auch bevorzugt, dass das Verschiebeelement eine Führungskulisse und einen in der Führungskulisse bewegbaren Stift aufweist. Es wird hierdurch eine Führung der Verstellbewegung bzw. der Verschiebebewegung der Sitzanordnung entlang der Verstelllänge in einfacher Weise realisiert, wobei dennoch eine große Robustheit der Anordnung mit einer Verstellkulisse und einem Führungsstift möglich ist.

Weiterhin ist es erfindungsgemäß bevorzugt vorgesehen, dass auf dem ersten Teilabschnitt und/oder auf dem zweiten Teilabschnitt eine Relativbewegung zumindest eines Teils des Verriegelungselements gegenüber dem Sitzteil vorgesehen ist und dass das Oberteil gegenüber dem Sitzteil feststehend vorgesehen ist. Hierdurch kann das Oberteil in vorteilhafter Weise besonders stabil mit dem Sitzteil verbunden werden.

Gemäß einer weiteren bevorzugten Ausführungsform der erfindungsgemäßen Sitzanordnung ist das Verschiebeelement als eine Führungsschiene vorgesehen, wobei die Führungsschiene eine Oberschiene und eine Unterschiene aufweist und wobei das Oberteil die Oberschiene umfasst und das Unterteil die Unterschiene umfasst. Hierdurch kann in besonders einfacher Weise sowie mit einer eingeführten Technologie und damit vergleichsweise kostengünstig eine Verschiebung der Sitzanordnung relativ zur Bodenbaugruppe des Kraftfahrzeugs realisiert werden, die zum einen besonders stabil und zum anderen besonders leichtgängig verschiebbar ist. Diese besonders leichtgängige Verschiebemöglichkeit ist insbesondere dann möglich, wenn die Führungsschiene mittels Kugellagern beweglich gelagert vorgesehen ist.

Ferner ist es erfindungsgemäß bevorzugt vorgesehen, dass das Unterteil als eine mit einer Bodenbaugruppe des Fahrzeugs fest verbundene Verstellplatte vorgesehen ist. Hierdurch kann eine besonders robuste und einfach modifizierbar bzw. an unterschiedliche Fahrzeugtypen anpassbare Verstellbewegung der Sitzanordnung realisiert werden.

Ausführungsbeispiele der Erfindung sind in der Zeichnung dargestellt und in der nachfolgenden Beschreibung näher erläutert.
- **Figur 1**: zeigt schematisch eine perspektivische Ansicht einer erfindungsgemäßen Sitzanordnung mit einem Sitzteil sowie einer Detaildarstellung.
- **Figur 2**: zeigt schematisch in Seitenansicht eine nicht beanspruchte Sitzanordnung in einer Normalposition der Sitzanordnung.
- **Figur 3**: zeigt schematisch in Seitenansicht die Sitzanordnung in einer Klapposition.
- **Figur 4**: zeigt schematisch eine Seitenansicht einer Ausführungsform einer erfindungsgemäßen Sitzanordnung mit einem Sitzteil und einem Verschiebeelement.
- **Figur 5**: zeigt schematisch in Draufsicht ein Unterteil einer erfindungsgemäßen Sitzanordnung.
- **Figur 6**: zeigt in einer schematischen Schnittdarstellung einen Querschnitt durch einen Teil des Unterteils gemäß der Ausführungsform der Sitzanordnung **(****Figur 5****).**
- **Figur 7**: zeigt schematisch eine perspektivische Darstellung der erfindungsgemäßen Sitzanordnung mit dem Sitzteil.

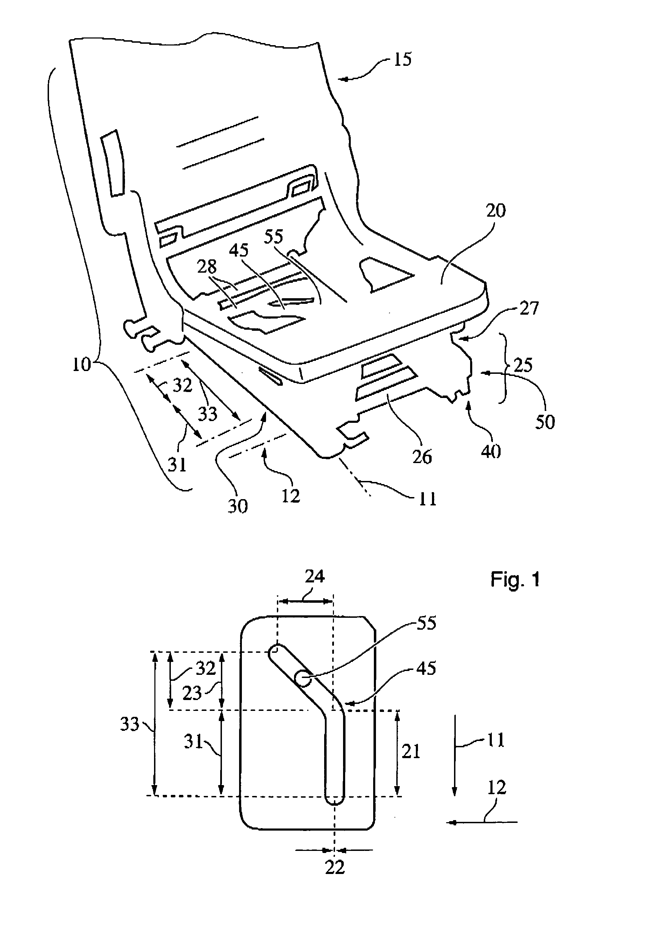

In Figur 1 ist schematisch in perspektivischer Darstellung eine erfindungsgemäße Sitzanordnung 10 dargestellt. Die Sitzanordnung 10 weist ein Sitzteil 20 sowie in der Regel ein Lehnenteil 15 auf, wobei in der Regel das Lehnenteil 15 beweglich, beispielsweise neigungseinstellbar, mit dem Sitzteil 20 verbunden ist. Das Lehnenteil 15 und seine Anbindung an das Sitzteil 20 ist jedoch nicht der Hauptgegenstand der vorliegenden Erfindung, sondern die Anbindung des Sitzteils 20 an einen Sitzunterbau 25 sowie die Anbindung des Sitzunterbaus an eine Bodenbaugruppe 5 (in Figur 1 nicht dargestellt) des Fahrzeugs. Zu der Anbindung des Sitzunterbaus 25 an die Bodenbaugruppe 5 des Fahrzeugs ist erfindungsgemäß ein Verschiebeelement 30 vorgesehen. Mittels des Verschiebeelements 30 der Sitzanordnung 10 kann das Sitzteil 20 gegenüber der Bodenbaugruppe 5 des Fahrzeugs verschoben werden. Hierbei weist das

Verschiebeelement 30 ein fahrzeugfest angeordnetes Unterteil 40 und ferner ein Oberteil 50 auf. Ferner definiert das Verschiebeelement 30 eine Verstelllänge 33. Auf der Verstelllänge 33 kann das Sitzteil 20 der Sitzanordnung 10 mittels des Verschiebeelements 30 verschoben bzw. verstellt werden. Die Verstelllänge 33 ist erfindungsgemäß bevorzugt eine definierte Länge, d. h. mit einem definierten Anfangspunkt und einem definierten Endpunkt. Dieser Sachverhalt ist in einer vergrößerten Darstellung der Verstelllänge 33 im unteren Teil der Figur 1 nochmals in größerem Detail dargestellt. Die Verstelllänge 33 ist in allen Ausführungsformen der vorliegenden Erfindung bevorzugt nicht wesentlich größer vorgesehen als die Ausdehnung der Sitzanordnung 10 entlang einer Sitzlängsachse 11 bzw. entlang der Fahrzeuglängsachse 11. Besonders bevorzugt ist es, wenn die Verstelllänge 33 etwa 500 mm oder kleiner ist. Ganz besonders bevorzugt ist, wenn die Verstelllänge 33 etwa 250 mm oder kleiner ist. Zur definierten Einstellung der Gesamtverstellbewegung weist der Sitzunterbau 25 ein Verschiebeelement 30 auf, welches ein fahrzeugfest angeordnetes Unterteil 40 und ein Oberteil 50 aufweist. Hierbei ist das Unterteil 40 entweder direkt oder über die Bodenbaugruppe 5 des Kraftfahrzeugs mit einer Führungskulisse 45 verbunden, in welcher ein Stift 55, der beispielsweise mit dem Sitzteil 20 verbunden sein kann und damit bei einer Bewegung des Sitzteils 20 entlang der Verstelllänge 33 die Bewegung des Sitzteils 20 vorgibt. Hierbei ist es erfindungsgemäß insbesondere vorgesehen, dass auf einem ersten Teilabschnitt 31 der Verstelllänge eine erste Längsbewegung 21 des Sitzteils 20 und eine erste Querbewegung 22 des Sitzteils 20 vorgesehen ist, wobei auf einem zweiten Teilabschnitt 32 der Verstelllänge 33 eine zweite Längsbewegung 23 und eine zweite Querbewegung 24 des Sitzteils 20 entspricht, wobei im dargestellten Beispielsfall der Führungskulisse 45 (vgl. Figur 1 unten) der erste Teilabschnitt 31 der Verstelllänge 33 parallel zur Fahrzeugslängsachse 11 bzw. parallel zur Sitzlängsachse 11 verläuft, so dass die erste Längsbewegung 21 dem ersten Teilabschnitt 31 entspricht und die erste Querbewegung 22 verschwindet bzw. Null ist. In diesem Beispiel entspricht für die Bewegung des Sitzteils 20 auf dem zweiten Teilabschnitt 32 der Verstelllänge 33 die zweite Längsbewegung 23 der Länge des zweiten Teilabschnitts 32 entlang der Fahrzeuglängsachse 11 und es entspricht die zweite Querbewegung 24 des Sitzteils 20 der Erstreckung der Führungskulisse 45 in Querrichtung 12, d. h. die zweite Querbewegung verschwindet nicht. Hierdurch bewegt sich das Sitzteil 20 bei einer Komplettverschiebung des Sitzteils 20 auf der gesamten Verstelllänge 33 gemäß einem geknickten oder sonstwie nichtgeradlinigen Bewegungsverlauf. Es unterscheidet sich dadurch das Verhältnis der ersten Längsbewegung 21 zur ersten Querbewegung 22 gegenüber dem Verhältnis der zweiten Längsbewegung 23 zur zweiten Querbewegung 24 . Die Verstellung des Sitzteils 20 auf der Verstelllänge 33 erfolgt daher nicht geradlinig, sondern es existiert wenigstens ein Knick oder eine Krümmung oder eine S-förmig gestaltete Bewegung des Sitzteils 20 oder dergleichen mehr. Der Stift 55 kann entweder als in der Führungskulisse 45 gleitend bewegbar sein oder auch mittels einer nicht dargestellten Rolle (oder Kugellager) vorgesehen sein, die beispielsweise an der Wand der Führungskulisse 45 abrollt. Die zuletzt genannte Alternative hat den Vorteil, dass eine leichtgängige Verschiebung zu erreichen ist.

Bei einer bekannten Sitzanordnung ist es vorgesehen, dass die Sitzanordnung eine quer zu der Sitzlängsachse 11 sich erstreckende Querachse 12 aufweist, wobei das Sitzteil 20 entlang der Querachse 12 gegenüber dem Sitzunterbau 25 verschieblich vorgesehen ist und wobei zumindest teilweise das Sitzteil 20 um die Querachse 12 schwenkbar vorgesehen ist. Dies wird gemäß Figur 1 beispielhaft mittels einer Stange 26 bewerkstelligt, die parallel zur Querachse 12 angeordnet ist, wobei das Sitzteil 20 mit der Stange 26 durch wenigstens einen Gelenkarm 27 verbunden ist. Der Gelenkarm 27 ist an seinem einen Ende mit dem Sitzteil 20, insbesondere mit dem vorderen Teil des Sitzteils 20, verbunden und mit seinem anderen Ende mit der Stange 26 derart verbunden, dass der Gelenkarm 27 relativ zur Stange 26 sowohl um die Querachse 12 sich drehen bzw. schwenken kann und dass weiterhin der Gelenkarm 27 entlang der Stange 26 in Richtung der Querachse 12 verschieblich ist. Hierzu weist der Gelenkarm 27 eine nicht eigens mit einem Bezugszeichen bezeichnete Buchse auf, durch die die Stange 26 geführt ist.

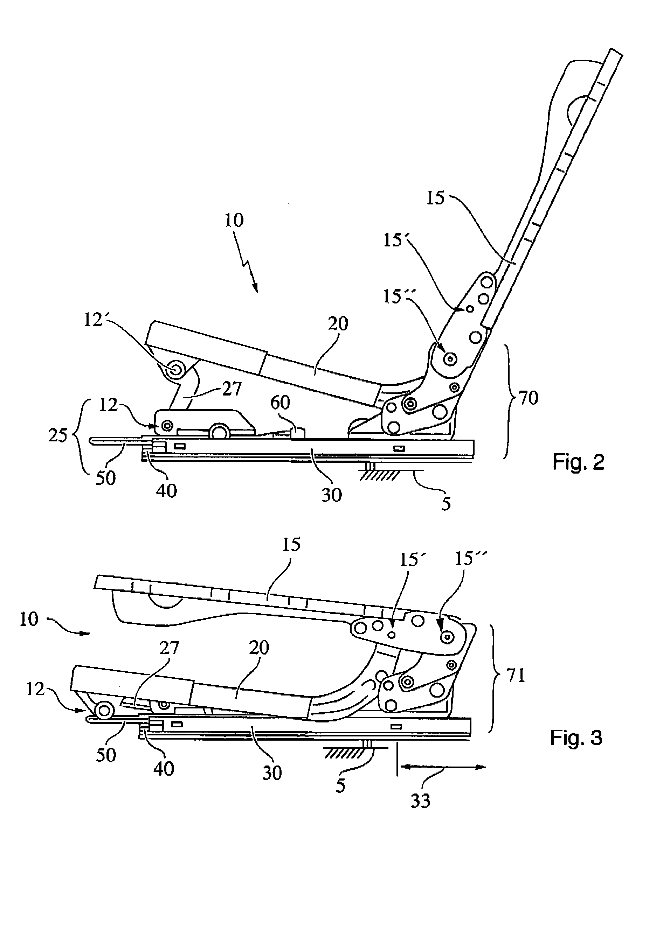

In Figur 2 ist schematisch eine Seitenansicht einer nicht beanspruchten Ausführung der Sitzanordnung 10 dargestellt. Hierbei ist die Sitzanordnung 10 in eine Normalposition 70 eingestellt. In der **Figur 3** ist die Sitzanordnung 10 in einer Klappposition 71 angeordnet. Gegenüber der Normalposition 70 ist bei der Klappposition die Rückenlehne 15 der Sitzanordnung nach vorne in Richtung auf die Querachse 12 hin bzw. in Richtung auf das Sitzteil 20 hin geklappt. Aufgrund der Anbindung des Sitzteils 20 an dem Lehnenteil 15 an einem Gelenkpunkt 15', der von einem weiteren, die Schwenkachse der Rückenlehne 15 bildenden Gelenkpunkt 15" beabstandet angeordnet ist, verlagert sich das Sitzteil 20 bei einem Nachvomeschwenken der Rückenlehne 15 ebenfalls nach vorne, was dazu führt, dass der Gelenkarm 27 um die Querachse 12 und damit auch das Sitzteil 20 zumindest teilweise um die Querachse 12 geschwenkt wird. Dies führt bei der Schwenkung des Sitzteils 20 zu einer Absenkung des Sitzteils 20, so dass das Lehnenteil 15 in eine vergleichsweise tiefen Position einstellbar ist und auf seiner Rückseite eine möglichst ebene und möglichst großflächige Ladefläche freigibt. Alternativ oder zusätzlich kann es auch vorgesehen sein, dass das Sitzteil 20 sich im Bereich des ersten Gelenkpunktes 15' von der Rückenlehne 15' trennen lässt und vollständig nach vorne um die Querachse 12 schwenkbar ist (nicht dargestellt). Ferner kann es auch vorgesehen sein, dass nach einer Einstellung in die Klappposition (Figur 3) das Sitzteil 20 zusammen mit der Rückenlehne 15 um die Querachse 12 geschwenkt werden kann um eine noch bessere Lademöglichkeit oder einen größeren Stauraum zu erzielen.

Die Sitzanordnung 10 umfasst erfindungsgemäß bevorzugt ein Verriegelungselement 60 (lediglich in **Figur 2** dargestellt). Hierbei kann es sich beispielsweise um eine klassische Verrastungsschiene bzw. um eine Zahnschiene mit entsprechenden Sperrklinken handeln. Hierbei ist beispielsweise die Zahnschiene mit dem Unterteil 40 verbunden und die Sperrklinken können von der Seite des Oberteils 50 aus mit einer solchen Zahnstange verriegelt werden. Hierbei ist es erfindungsgemäß so, dass entweder der Verlauf des Verriegelungselementes 60 im wesentlichen dem Verlauf des Verschiebeelements 30 (d. h. mit dessen Krümmung bzw. Knick) entspricht (diese Ausführung ist in den Figuren nicht dargestellt) oder aber es ist beispielsweise der Verlauf des Verriegelungselementes 60 geradlinig vorgesehen, wobei das Oberteil 50 beim Durchfahren der Verstelllänge 33 gegenüber dem Sitzteil 20 eine Relativbewegung ausführt.

Parallel zu der Querachse 12 bzw. zu der weiteren Achse 12' ist es im hinteren Teil der Sitzanordnung 10 vorgesehen, dass weitere stangenartige Schiebeelemente 28 vorgesehen sind, mittels der das Sitzteil 20 relativ zum Oberteil 50 des Verschiebeelements 30 parallel zur Querachse 12 verschiebbar sind.

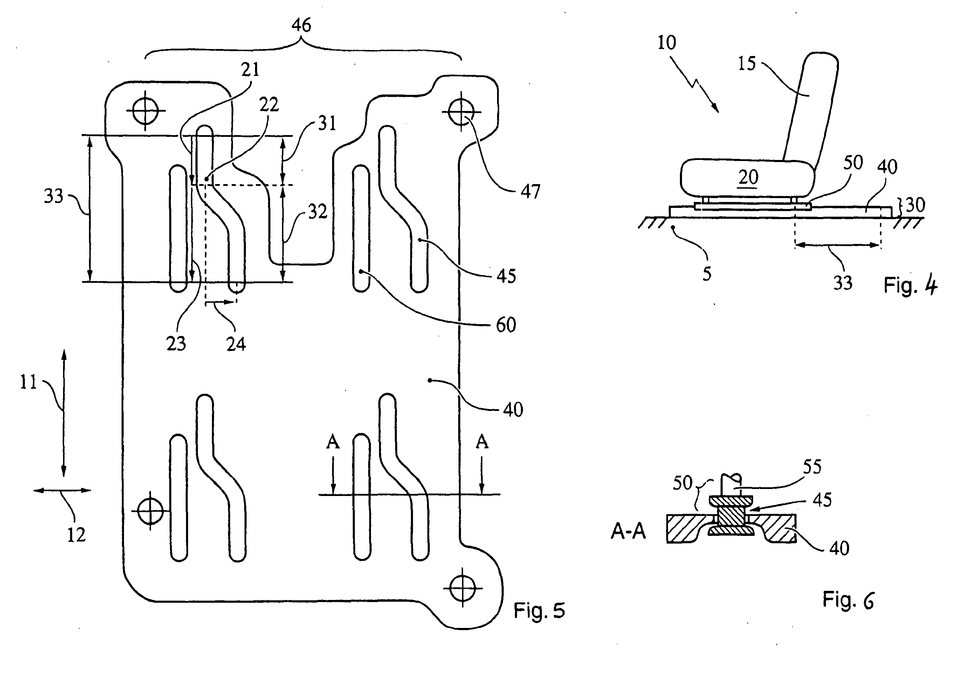

In **Figur 4** ist schematisch eine Seitenansicht einer Ausführungsform der erfindungsgemäßen Sitzanordnung 10 für ein Kraftfahrzeug dargestellt. Die Sitzanordnung 10 weist das Sitzteil 20 sowie in der Regel das Lehnenteil 15 auf, wobei in der Regel das Lehnenteil 15 beweglich, beispielsweise neigungseinstellbar, mit dem Sitzteil 20 verbunden ist. Das Lehnenteil 15 und seine Anbindung an das Sitzteil 20 ist jedoch nicht der Hauptgegenstand der vorliegenden Erfindung, sondern die Anbindung des Sitzteils 20 an der Bodenbaugruppe 5 des Kraftfahrzeugs. Zu der Anbindung des Sitzteils 20 an die Bodenbaugruppe 5 des Fahrzeugs ist erfindungsgemäß das Verschiebeelement 30 vorgesehen. Mittels des Verschiebeelementes 30 der Sitzanordnung 10 kann das Sitzteil 20 gegenüber der Bodenbaugruppe 5 des Fahrzeugs verschoben werden. Hierbei weist das Verschiebeelement 30 das fahrzeugfest angeordnete Unterteil 40 auf und ferner das Oberteil 50. Ferner definiert das Verschiebeelement 30 die Verstelllänge 33. Auf der Verstelllänge 33 kann das Sitzteil 20 der Sitzanordnung 10 mittels des Verschiebeelements 30 verschoben bzw. verstellt werden. Erfindungsgemäß ist es nun vorgesehen, dass die Verstelllänge 33 bzw. der Einstellbereich des Verschiebeelements 30 keine geradlinige Verschiebestrecke bildet, sondern eine zumindest in einem Teilbereich abgeknickte bzw. gekrümmte Verstelllänge. Hierbei können erfindungsgemäß beliebig geformte Verschiebestrecken bzw. Verstelllängen vorgesehen sein, etwa solche, welche (wie in den dargestellten Beispielen) einen geradlinigen Abschnitt und eine Knickstelle oder eine Krümmungsstelle aufweisen oder auch solche, die ausschließlich gekrümmte Abschnitte aufweisen. Bevorzugt ist es gemäß der vorliegenden Erfindung weiterhin vorgesehen, dass während der Verschiebung des Sitzteils 20 keine (aufgrund der Verschiebung hervorgerufene) Drehung des Sitzteils 20, insbesondere um eine im wesentlichen senkrechte Drehachse) erfolgt, sondern dass die Drehlage des Sitzteils 20 relativ zum Fahrzeug konstant bleibt.

In **Figur 5** ist ein Verschiebeelement 30 anhand einer schematischen Draufsicht auf das Unterteil 40 gemäß der Ausführungsform der Sitzanordnung 10 dargestellt. Bei der zweiten Ausführungsform der Sitzanordnung 10 weist das Unterteil 40 eine Verstellplatte 46 auf bzw. es wird das Unterteil 40 im wesentlichen durch die Verstellplatte 46 gebildet. In der Verstellplatte 46 sind gemäß der zweiten Ausführungsform der Sitzanordnung 10 eine Mehrzahl von Führungskulissen 45 eingebracht, wobei es erfindungsgemäß auch möglich ist, dass lediglich eine einzige Führungskulisse 45 in einer Verstellplatte 46 gemäß der zweiten Ausführungsform der Sitzanordnung 10 eingebracht ist. Die Verstellplatte 46 ist an Befestigungsstellen 47 mit der Bodenbaugruppe 5 des Fahrzeugs verbunden.

Ferner ist aus **Figur 5** die Verstelllänge 33 ersichtlich, welche im wesentlichen der nutzbaren Länge der Führungskulisse 45 entspricht. Hierbei ist beispielhaft der erste Teilabschnitt 31 der Verstelllänge 33 und der zweite Teilabschnitt 32 der Verstelllänge 33 eingezeichnet. Wenn sich ein Element des in Figur 5 nicht dargestellten Oberteils 50 in der Führungskulisse 45 auf dem erstem Teilabschnitt 31 der Verstelllänge 33 bewegt, so findet eine Bewegung des Sitzteils 20 lediglich in Richtung der Fahrzeugslängsachse 11 statt, d. h. parallel zur Fahrzeugslängsachse 11. Bei einer Verschiebung der Sitzanordnung 10 auf dem zweiten Teilabschnitt 33 erfolgt eine Bewegung des Sitzteils 20 nicht nur Richtung der Fahrzeugslängsachse 11 sondern auch in Richtung einer quer zur Fahrzeuglängsachse 11 verlaufenden Querachse 12. Es kann somit auf dem ersten Teilabschnitt 31 der Verstelllänge 33 von einer ersten Längsbewegung 21 des Sitzteils 20 und von einer ersten Querbewegung 22 des Sitzteils 20 gesprochen werden, wobei im dargestellten Beispielfall, bei dem der erste Teilabschnitt 31 der Verstelllänge 33 parallel zur Fahrzeugslängsachse 11 verläuft, die erste Längsbewegung 21 dem ersten Teilabschnitt 31 entspricht und die erste Querbewegung 22 verschwindet bzw. Null ist. Für die Bewegung des Sitzteils 20 auf dem zweiten Teilabschnitt 32 der Verstelllänge 33 gilt im in der Figur 5 dargestellten Beispiel, dass die zweite Längsbewegung 23 der Länge des zweiten Teilabschnitts 32 entlang der Fahrzeugslängsachse 11 entspricht und dass die zweite Querbewegung 24 des Sitzteils 20 der Erstreckung der Verstelllänge 33 entlang der Querachse 12 entspricht, d. h. also nicht verschwindet. Hierdurch unterscheidet sich das Verhältnis der ersten Längsbewegung 21 zur ersten Querbewegung 22 gegenüber dem Verhältnis der zweiten Längsbewegung 23 zur zweiten Querbewegung 24, d. h. die Verstelllänge 33 des Verschiebeelementes 30 ist nicht gänzlich geradlinig ausgebildet sondern es existiert wenigstens ein Knick oder eine Krümmung oder eine S-förmige Gestalt der Verstelllänge 33 oder dergleichen mehr.

Die Sitzanordnung 10 umfasst erfindungsgemäß ferner das Verriegelungselement 60, welches in Figur 5 lediglich schematisch angedeutet ist. Hierbei kann es sich beispielsweise um eine klassische Verrastungsschiene bzw. um eine Zahnschiene mit entsprechenden Sperrklinken handeln. Hierbei ist beispielsweise die Zahnschiene mit dem Unterteil 40 verbunden und Sperrklinken können von der Seite des Oberteils 50 aus mit einer solchen Zahnstange verriegelt werden. Hierbei ist es erfindungsgemäß so, dass entweder der Verlauf des Verriegelungselementes 60 (etwa der Zahnstange oder einer ähnlichen Einrichtung) im wesentlichen dem Verlauf des Verschiebeelementes 30 (mit dessen Krümmung bzw. Knick) entspricht (diese Ausführung ist in Figur 5 nicht dargestellt) oder aber es ist beispielsweise der Verlauf des Veniegelungsefementes 60 geradlinig vorgesehen (wie in Figur 5 angedeutet), so dass wenigstens ein Element des Verriegelungselementes 60 (beispielsweise eine Sperrklinke) beim Durchfahren der Verstelllänge 33 gegenüber dem Oberteil 50 bzw. gegenüber dem Sitzteil 20 eine Relativbewegung ausführt. Demgegenüber ist aus der Figur 5 auch erkennbar, dass sich das in der Figur 5 nicht dargestellte Oberteil 50 des Verschiebeelements 30 komplett zusammen mit dem Sitzteil 20 entlang der Führungskulisse 45 bewegt. Mithin ist das Oberteil 50 gegenüber dem Sitzteil 20 feststehend vorgesehen, d. h. es findet keine Relativbewegung zwischen den beiden Elementen statt.

Gemäß einer Ausführungsform der Erfindung ist eine Verriegelung in wenigstens einer, bevorzugt jedoch einer Mehrzahl von Verriegelungspositionen, entlang der Verstelllänge mittels des Verriegelungselementes 60 möglich.

In **Figur 6** ist schematisch eine Schnittdarstellung entlang einer schnittlinie A-A durch die Verstellplatte 46 bzw. durch das Unterteil 40 dargestellt. In der Führungskulisse 45 des Unterteils 40 ist längsbeweglich (in der Figur 6 senkrecht zur Zeichenebene) der Stift 55 geführt, welcher zum Oberteil 50 der Sitzanordnung 10 bzw. des Verschiebeetements 30 gehört. Wenn die Anordnung gemäß der in Figur 5 dargestellten Ausführungsform der Sitzanordnung 10 gewählt ist, gibt es eine Relativbewegung zumindest eines Teils des Verriegelungselements 16 gegenüber dem Sitzteil 20 bzw. gegenüber dem Oberteil 50. Dies rührt daher, weil der Verlauf des Verriegelungselementes 60, wie aus der Figur 5 einfach ersichtlich ist, nicht dem Verlauf der Führungskulisse 45 entspricht.

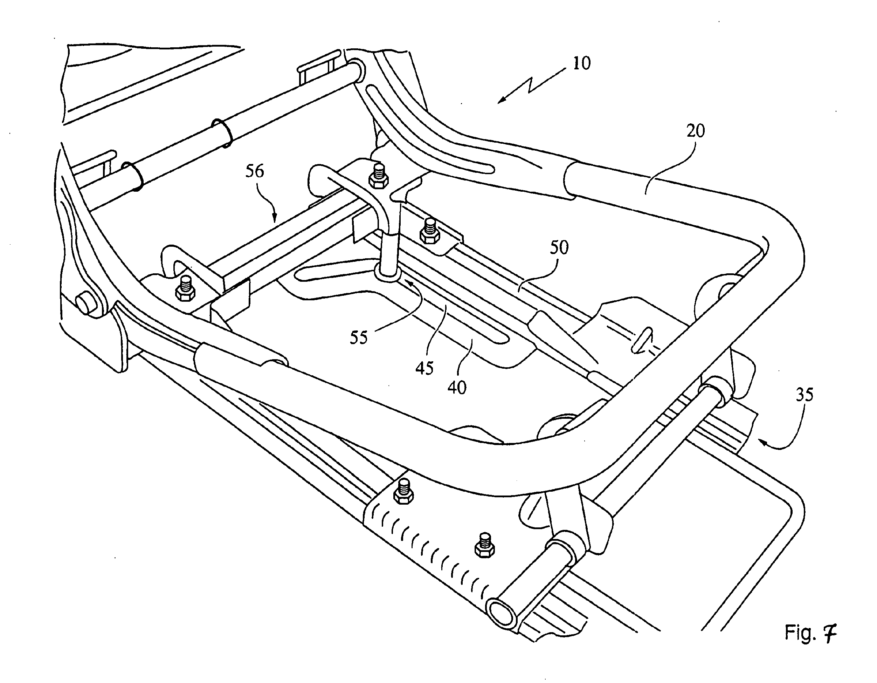

In **Figur 7** ist eine perspektivische Darstellung der erfindungsgemäßen Sitzanordnung 10 dargestellt. Die Sitzanordnung 10 weist das Sitzteil 20 auf, welches jedoch lediglich mittels eines Rahmenelements dargestellt ist. Als Verschiebeelement 30 ist bei der Sitzanordnung 10 eine herkömmlicherweise für die Sitzverstellung verwendete Führungsschiene 35 vorgesehen, welche in bekannter Weise eine Oberschiene und eine Unterschiene aufweist. Die Oberschiene wird im Rahmen der vorliegenden Erfindung als zum Oberteil 50 gehörig angesehen, während die Unterschiene als zum Unterteil 40 gehörig angesehen wird. Bei der Sitzanordnung 10 ist die Führungskulisse 45 ebenfalls Teil des Unterteils 40 somit beispielsweise mit der Unterschiene der Führungsschiene 35 verbunden. Diese Verbindung kann entweder direkt, beispielsweise einstückig oder mittels eines Verbindungselementes erfolgen oder aber auch indirekt über eine Befestigung sowohl der Unterschiene als auch des die Führungskulisse 45 aufweisenden Teils des Unterteils 40 an der Bodenbaugruppe 5 des Fahrzeugs (in Figur 7 nicht dargestellt). Bei der Sitzanordnung 10 ist es vorgesehen, dass sich das Oberteil 50 lediglich geradlinig entlang der längsverlaufenden Führungsschiene 35 bewegt, während das Sitzteil 20 relativ zum Oberteil 50 verschieblich angeordnet ist. Die Relativbewegung des Sitzteils 20 relativ zum Oberteil 50 erfolgt jedoch in eine Richtung quer zur Verstellrichtung (gewöhnlich mit der Fahrzeuglängsachse 11 zusammenfallend, jedoch nicht zwingend) der Führungsschiene 35. Hierzu weist das Oberteil 50 eine Querstrebe 56 auf, entlang der das Sitzteil 20 querverschieblich bewegbar ist. Der in der Führungskulisse 45 laufende Stift 5 ist bei der Sitzanordnung 10 mit dem Sitzteil 20 verbunden und kann damit entlang der Querstrebe 56 (gewöhnlich entlang der Querachse 12 ausgerichtet, jedoch nicht zwingend) bewegt werden.

Bevorzugte Ausführungsbeispiele der Erfindung sind:
1. Sitzanordnung 10 für ein Kraftfahrzeug, wobei die Sitzanordnung 10 ein Sitzteil 20 aufweist, wobei die Sitzanordnung 10 ferner ein Verschiebeelement 30 mit einer Verstelllänge 33 aufweist, wobei das Verschiebeelement 30 ein fahrzeugfest angeordnetes Unterteil 40 und ein Oberteil 50 aufweist, wobei auf einem ersten Teilabschnitt 31 der Verstelllänge 33 eine erste Längsbewegung 21 des Sitzteils 20 parallel zu einer Fahrzeuglängsachse 11 und eine erste Querbewegung 22 des Sitzteils 20 parallel zu einer quer zur Fahrzeuglängsachse 11 sich erstreckenden Querachse 12 vorgesehen ist und wobei auf einem zweiten Teilabschnitt 32 der Verstelllänge 33 eine zweite Längsbewegung 23 des Sitzteils 20 parallel zu der Fahrzeuglängsachse 11 und eine zweite Querbewegung 24 des Sitzteils 20 parallel zur Querachse 12 vorgesehen ist, wobei sich das Verhältnis der ersten Längsbewegung 21 zur ersten Querbewegung 22 vom Verhältnis der zweiten Längsbewegung 23 zur zweiten Querbewegung 24 unterscheidet.
2. Sitzanordnung 10 nach Ausführungsbeispiel 10, wobei auf dem ersten Teilabschnitt 31 und/oder auf dem zweiten Teilabschnitt 32 eine Relativbewegung des Oberteils 50 gegenüber dem Sitzteil 20 vorgesehen ist.
3. Sitzanordnung 10 nach Ausführungsbeispiel 10 oder 11, wobei die Sitzanordnung 10 ein Verriegelungselement 60 aufweist, wobei das Verriegelungselement 60 zur Fixierung der Sitzanordnung 10 an zumindest einer Verriegelungsposition entlang der Verstelllänge 33 vorgesehen ist.
4. Sitzanordnung 10 nach einem der vorhergehenden Ausführungsbeispiele, wobei eine Vielzahl von Verriegelungspositionen entlang der Verstelllänge 33 vorgesehen sind.
5. Sitzanordnung 10 nach einem der vorhergehenden Ausführungsbeispiele, wobei das Verriegelungselement 60 zur direkten Verriegelung des Oberteils 50 mit dem Unterteil 40 vorgesehen ist.
6. Sitzanordnung 10 nach einem der vorhergehenden Ausführungsbeispiele, wobei das Verschiebeelement 30 eine Führungskulisse 45 und einen in der Führungskulisse 45 bewegbaren Stift 55 aufweist.
7. Sitzanordnung 10 nach einem der vorhergehenden Ausführungsbeispiele, wobei auf dem ersten Teilabschnitt 31 und/oder auf dem zweiten Teilabschnitt 32 eine Relativbewegung zumindest eines Teils des Verriegelungselements 60 gegenüber dem Sitzteil 20 vorgesehen ist und wobei das Oberteil 50 gegenüber dem Sitzteil 20 feststehend vorgesehen ist.
8. Sitzanordnung 10 nach einem der vorhergehenden Ausführungsbeispiele, wobei das Verschiebeelement 30 als eine Führungsschiene 35 vorgesehen ist, wobei die Führungsschiene 35 eine Oberschiene und eine Unterschiene aufweist und wobei das Oberteil 50 die Oberschiene umfasst und das Unterteil 40 die Unterschiene umfasst.
9. Sitzanordnung 10 nach einem der vorhergehenden Ausführungsbeispiele, wobei das Unterteil 40 als eine mit einer Bodenbaugruppe 5 des Fahrzeugs fest verbundene Verstellplatte 46 vorgesehen ist.

### Bezugszeichenliste

- 5: Bodenbaugruppe des Fahrzeugs
- 10: Sitzanordnung
- 11: Fahrzeuglängsachse
- 12: Querachse
- 12': weitere Achse
- 15: Lehnenteil
- 15`: Gelenkpunkt
- 15": weiterer Gelenkpunkt
- 20: Sitzteil
- 21: erste Längsbewegung
- 22: erste Querbewegung
- 23: zweite Längsbewegung
- 24: zweite Querbewegung
- 25: Sitzunterbau
- 26: Stange
- 27: Gelenkarm
- 28: stangenartiges Schiebeelement
- 30: Verschiebeelement
- 31: erster Teilabschnitt
- 32: zweiter Teilabschnitt
- 33: Verstelllänge
- 34: Führungsschiene
- 40: Unterteil
- 45: Führungskulisse
- 46: Verstellplatte
- 47: Befestigung mit Bodenbaugruppe
- 50: Oberteil
- 55: Stift
- 56: Querstreber
- 60: Verriegelungselement
- 70: Normalposition
- 71: Klappposition

## Patentansprüche

1. Sitzanordnung (10) für ein Kraftfahrzeug, wobei die Sitzanordnung (10) ein Sitzteil (20) aufweist, wobei die Sitzanordnung (10) ein Verschiebeelement (30) mit einer Verstelllänge (33) aufweist, wobei das Verschiebeelement (30) ein fahrzeugfest angeordnetes Unterteil (40) und ein Oberteil (50) aufweist, wobei auf einem ersten Teilabschnitt (31) der Verstelllänge (33) eine erste Längsbewegung (21) des Sitzteils (20) parallel zu einer Fahrzeuglängsachse (11) und eine erste Querbewegung (22) des Sitzteils (20) parallel zu einer quer zur Fahrzeuglängsachse (11) sich erstreckenden Querachse (12) vorgesehen ist und wobei auf einem zweiten Teilabschnitt (32) der Verstelllänge (33) eine zweite Längsbewegung (23) des Sitzteils (20) parallel zu der Fahrzeuglängsachse (11) und eine zweite Querbewegung (24) des Sitzteils (20) parallel zur Querachse (12) vorgesehen ist, wobei sich das Verhältnis der ersten Längsbewegung (21) zur ersten Querbewegung (22) vom Verhältnis der zweiten Längsbewegung (23) zur zweiten Querbewegung (24) unterscheidet, wobei auf dem ersten Teilabschnitt (31) und/oder auf dem zweiten Teilabschnitt (32) eine Relativbewegung des Sitzteils (20) gegenüber dem Oberteil (50) vorgesehen ist, wobei die Bewegung des Sitzteils (20) dem Verlauf einer beliebig geformten Verschiebestrecke folgt, **dadurch gekennzeichnet, dass** das Oberteil (50) eine Querstrebe (56) aufweist, entlang der das Sitzteil (20) querverschieblich bewegbar ist.

2. Sitzanordnung (10) nach Anspruch 1, **dadurch gekennzeichnet, dass** die Sitzanordnung (10) ein Verriegelungselement (60) aufweist, wobei das Verriegelungselement (60) zur Fixierung der Sitzanordnung (10) an zumindest einer Verriegelungsposition entlang der Verstelllänge (33) vorgesehen ist.

3. Sitzanordnung (10) nach einem der vorhergehenden Ansprüche, **dadurch gekennzeichnet, dass** das Verschiebeelement (30) eine Führungskulisse (45) und einen in der Führungskulisse (45) bewegbaren Stift (55) aufweist, wobei insbesondere der Stift (55) eine Rolle trägt.

4. Sitzanordnung (10) nach einem der vorhergehenden Ansprüche, **dadurch gekennzeichnet, dass** das Verschiebeelement (30) als eine Führungsschiene (35) vorgesehen ist, wobei die Führungsschiene (35) eine Oberschiene und eine Unterschiene aufweist und wobei das Oberteil (50) die Oberschiene umfasst und das Unterteil (40) die Unterschiene umfasst.

5. Sitzanordnung (10) nach einem der vorhergehenden Ansprüche, **dadurch gekennzeichnet, dass** eine Vielzahl von Verriegelungspositionen entlang der Verstelllänge (33) vorgesehen sind.

6. Sitzanordnung (10) nach Anspruch 2, **dadurch gekennzeichnet, dass** das Verriegelungselement (60) zur direkten Verriegelung des Oberteils (50) mit dem Unterteil (40) vorgesehen ist.

7. Sitzanordnung (10) nach einem der vorhergehenden Ansprüche, **dadurch gekennzeichnet, dass** das Verschiebeelement (30) eine Führungskulisse (45) und einen in der Führungskulisse (45) bewegbaren Stift (55) aufweist.

8. Sitzanordnung (10) nach einem der vorherigen Ansprüche, **dadurch gekennzeichnet, dass** das Unterteil (40) als eine mit der Bodenbaugruppe (5) des Fahrzeugs fest verbundene Verstellplatte vorgesehen ist.

9. Sitzanordnung (10) nach einem der vorherigen Ansprüche, **dadurch gekennzeichnet, dass** das Oberteil (50) geradlinig entlang einer längsverlaufenden Führungsschiene (35) beweglich ist.

## Claims

1. Seat arrangement (10) for a motor vehicle, the seat arrangement (10) having a seat part (20), the seat arrangement (10) having a displacement element (30) with a displacement length (33), the displacement element (30) having a lower part (40) which is fixed with respect to the vehicle and an upper part (50), a first longitudinal movement (21) of the seat part (20) parallel to a vehicle longitudinal axis (11) and a first transverse movement (22) of the seat part (20) parallel to a transverse axis (12) extending transversely to the vehicle longitudinal axis (11) being provided on a first partial section (31) of the adjustment length (33), a second longitudinal movement (23) of the seat part (20) parallel to the vehicle longitudinal axis (11) and a second transverse movement (24) of the seat part (20) parallel to the transverse axis (12) being provided on a second partial section (32) of the adjustment length (33), and the ratio of the first longitudinal movement (21) to the first transverse movement (22) differing from the ratio of the second longitudinal movement (23) to the second transverse movement (24), a relative movement of the seat part (20) with respect to the upper part (50) being provided on the first partial section (31) and/or on the second partial section (32), the movement of the seat part (20) following the path of a displacement path of any desired shape, **characterized in that** the upper part (50) has a transverse member (56) along which the seat part (20) is displaceable transversely.

2. Seat arrangement (10) according to Claim 1, **characterized in that** the seat arrangement (10) has a locking element (60), the locking element (60) being provided for fixing the seat arrangement (10) in at least one locking position along the adjustment length (33).

3. Seat arrangement (10) according to any one of the preceding claims, **characterized in that** the displacement element (30) has a guide slot (45) and a pin (55) which is movable in the guide slot (45), the pin (55) carrying, in particular, a roller.

4. Seat arrangement (10) according to any one of the preceding claims, **characterized in that** the displacement element (30) is provided as a guide rail (35), the guide rail (35) comprising an upper rail and a lower rail and the upper part (50) including the upper rail and the lower part (40) the lower rail.

5. Seat arrangement (10) according to any one of the preceding claims, **characterized in that** a multiplicity of locking positions are provided along the adjustment length (33).

6. Seat arrangement (10) according to Claim 2, **characterized in that** the locking element (60) is provided for directly locking the upper part (50) to the lower part (40).

7. Seat arrangement (10) according to any one of the preceding claims, **characterized in that** the displacement element (30) has a guide slot (45) and a pin (55) which is movable in the guide slot (45).

8. Seat arrangement (10) according to any one of the preceding claims, **characterized in that** the lower part (40) is provided as an adjustment plate which is rigidly connected to a floor assembly (5) of the vehicle.

9. Seat arrangement (10) according to one of the preceding claims, **characterized in that** the upper part (50) is moveable rectilinearly along a longitudinally disposed guide rail (35).

## Revendications

1. Ensemble de siège (10) pour un véhicule automobile, l'ensemble de siège (10) comportant une partie d'assise (20), l'ensemble de siège (10) comportant un élément coulissant (30) doté d'une longueur de réglage (33), l'élément coulissant (30) comportant une partie inférieure (40) disposée fixement par rapport au véhicule et une partie supérieure (50), un premier mouvement longitudinal (21) de la partie d'assise (20) étant prévu parallèlement à un axe longitudinal de véhicule (11) et un premier mouvement transversal (22) de la partie d'assise (20) étant prévu parallèlement à un axe transversal (12) s'étendant transversalement par rapport à l'axe longitudinal de véhicule (11) sur un premier segment partiel (31) de la longueur de réglage (33) et un deuxième mouvement longitudinal (23) de la partie d'assise (20) étant prévu parallèlement à l'axe longitudinal de véhicule (11) et un deuxième mouvement transversal (24) de la partie d'assise (20) étant prévu parallèlement à l'axe transversal (12) sur un deuxième segment partiel (32) de la longueur de réglage (33), le rapport du premier mouvement longitudinal (21) sur le premier mouvement transversal (22) se différenciant du rapport du deuxième mouvement longitudinal (23) sur le deuxième mouvement transversal (24), un mouvement relatif de la partie d'assise (20) par rapport à la partie supérieure (50) étant prévu sur le premier segment partiel (31) et/ou sur le deuxième segment partiel (32), le mouvement de la partie d'assise (20) suivant la trajectoire d'un tronçon de déplacement de forme quelconque, **caractérisé en ce que** la partie supérieure (50) comporte un étai transversal (56) le long duquel la partie d'assise (20) peut être déplacée de façon à présenter un coulissement transversal.

2. Ensemble de siège (10) selon la revendication 1, **caractérisé en ce que** l'ensemble de siège (10) comporte un élément de verrouillage (60), l'élément de verrouillage (60) étant prévu pour fixer l'ensemble de siège (10) au niveau d'au moins une position de verrouillage prévue le long de la longueur de réglage (33).

3. Ensemble de siège (10) selon l'une quelconque des revendications précédentes, **caractérisé en ce que** l'élément coulissant (30) comporte un coulisseau de guidage (45) et une tige (55) pouvant être déplacée dans le coulisseau de guidage (45), la tige (55) supportant notamment un rouleau.

4. Ensemble de siège (10) selon l'une quelconque des revendications précédentes, **caractérisé en ce que** l'élément coulissant (30) prend la forme d'un rail de guidage (35), le rail de guidage (35) comportant un rail supérieur et un rail inférieur et la partie supérieure (50) comprenant le rail supérieur et la partie inférieure (40) comprenant le rail inférieur.

5. Ensemble de siège (10) selon l'une quelconque des revendications précédentes, **caractérisé en ce qu'**une pluralité de positions de verrouillage sont prévues le long de la longueur de réglage (33).

6. Ensemble de siège (10) selon la revendication 2, **caractérisé en ce que** l'élément de verrouillage (60) est prévu pour verrouiller directement la partie supérieure (50) à la partie inférieure (40).

7. Ensemble de siège (10) selon l'une quelconque des revendications précédentes, **caractérisé en ce que** l'élément coulissant (30) comporte un coulisseau de guidage (45) et une tige (55) pouvant être déplacée dans le coulisseau de guidage (45).

8. Ensemble de siège (10) selon l'une quelconque des revendications précédentes, **caractérisé en ce que** la partie inférieure (40) prend la forme d'une plaque de réglage reliée fixement au groupe modulaire de plancher (5) du véhicule.

9. Ensemble de siège (10) selon l'une quelconque des revendications précédentes, **caractérisé en ce que** la partie supérieure (50) peut se déplacer en ligne droite le long d'un rail de guidage (35) s'étendant dans le sens de la longueur.
